# EUROPÄISCHE PATENTSCHRIFT

(11) **EP 2 759 420 B1**
(45) Veröffentlichungstag und Bekanntmachung des Hinweises auf die Patenterteilung: **07.10.2015**
(21) Anmeldenummer: 14151275.6
(22) Anmeldetag: 15.01.2014
(51) Int. Cl.: B60C 27/12

(54) **Spannelemente für Schneeketten**
Fastening elements for snow chains
Élément de serrage pour chaînes à neige

(30) Priorität: 28.01.2013 DE 102013100811
(43) Veröffentlichungstag der Anmeldung: 30.07.2014
(73) Patentinhaber: Ottinger Schneeketten GmbH, 78224 Singen (DE)
(72) Erfinder: Ottinger, Peter, 78224 Singen (DE)
(74) Vertreter: Lermer, Christoph

(56) Entgegenhaltungen:
- EP-A1- 1 024 035
- EP-A2- 1 072 448
- FR-A1- 2 879 507

## Beschreibung

### TECHNISCHES GEBIET

Die vorliegende Anmeldung betrifft Spannvorrichtung für Schneeketten, umfassend: ein Gehäuse mit einem Innenraum und einer Öffnung; ein elastisches Spannelement mit einem ersten Endabschnitt, einem mit dem ersten Endabschnitt verbundenen Verbindungsabschnitt und einem mit dem Verbindungsabschnitt verbundenen zweiten Endabschnitt; wobei sich der erste Endabschnitt durch die Öffnung in den Innenraum des Gehäuses erstreckt; der zweite Endabschnitt im Innenraum des Gehäuses verläuft und wenigstens ein Abschnitt des zweiten Endabschnitts stationär im Innenraum des Gehäuses angeordnet ist; und eine elastische Komponente.

### STAND DER TECHNIK

Es ist eine Vielzahl von Spannelementen für Schneeketten bekannt.

Beispielsweise offenbart die Druckschrift EP 1 174 292 A2 eine selbstspannende Vorrichtung für Schneeketten, umfassend ein Gehäuse, und ein elastisches Rückholelement, wobei das Gehäuse einen Kanal aufweist, der das elastische Element aufnimmt. Außerdem ist ein Koppelkörper vorgesehen, der mit einem durchlaufenden Abschnitt der Schneekette in Eingriff gebracht werden kann.

Die gattungsbildende Druckschrift EP 1 1024 035 A1 offenbart ebenfalls eine selbstspannende Vorrichtung für Schneeketten für Fahrzeuge, umfassend ein äußeres Element, das auf der Außenseite des Rades angeordnet wird und zu einem Rine verschließbar ist und einem inneren Element, das auf der Innenseite des Rades angeordnet wird und zu einem Ringe verschließbar ist. Das innere und äußere Element wird durch unterschiedlich zusammengesetzte Element verbunden. Das Ende des äußeren Elements ist an eine Vorrichtung angebunden, die nur eine Bewegung in der Richtung ermöglicht, die die Kette spannt und nicht lockert. Femer umfasst die Vorrichtung einen Speicherblock der in der Lage ist, das Ende des äußeren Elements einzuhaken und unter Spannungzu halten. Der Druckschrift liegt dabei als Stand der Technik zugrunde, dass bekannte Schneeketten aus zwei seitlichen Teilen bestehen, die mit Verbindungselementen unter Verwendung von Spannung zu einem Ring verbunden werden, wobei das Problem auftritt, dass die Spannung mit der Zeit nachlassen kann, sich die Kette lockert und nachgespannt werden muss.

Aus der Druckschrift FR 2 879 507 ist ebenfalls eine selbstspannende Schneekette bekannt, die der nachlassenden Spannkraft der Kette entgegenwirken soll.

EP 1 072 448 A2 offenbart eine selbstspannende Schneekette, das aus einem inneren und äußeren ringförmige Element besteht, die mit Verbindungselementen verbunden werden. Eine Vorrichtung unterbindet eine Lockerung der Kette, um den bekannten Problemen des Lockerns der Schneekette entgehen zu wirken.

Kritisch bei herkömmlichen Rückhol- oder Spannelementen für Schneeketten sind der Platzbedarf, die Auszuglänge und die Kraftverhältnisse sowohl beim Vorspannen als auch die Spannung während des Einsatzes der Schneekette, die zuverlässig verhindern soll, dass sich die Schneekette lockert.

### AUFGABE DER ERFINDUNG

Ausgehend davon besteht die Aufgabe der vorliegenden Erfindung darin, eine Spannvorrichtüng für Schneeketten bereitzustellen, die zuverlässig funktioniert und geringen Platzbedarf erfordert.

### TECHNISCHE LÖSUNG

Diese Aufgabe wird gelöst durch eine Spannvorrichtung für Schneeketten nach Anspruch 1 oder nach Anspruch 13. Vorteilhafte Merkmale und bevorzugte Ausführungsformen ergeben sich aus den abhängigen Ansprüchen.

Eine erfindungsgemäße Spannvorrichtung für Schneeketten umfasst: ein Gehäuse mit einem Innenraum und einer Öffnung; ein elastisches Spannelement mit einem ersten Endabschnitt, einem mit dem ersten Endabschnitt verbundenen Verbindungsabschnitt und einem mit dem Verbindungsabschnitt verbundenen zweiten Endabschnitt; wobei sich der erste Endabschnitt durch die Öffnung in den Innenraum des Gehäuses erstreckt; der zweite Endabschnitt im Innenraum des Gehäuses verläuft und wenigstens ein Teilabschnitt oder ein Ende des zweiten Endabschnitts stationär im Innenraum des Gehäuses angeordnet ist; und eine elastische Komponente. Die unter einer Vorspannung stehende elastische Komponente übt eine Kraft auf den Verbindungsabschnitt des elastischen Spannelements derart aus, dass der erste Endabschnitt des Spannelements durch die von der vorgespannten elastischen Komponente ausgeübte Kraft in Richtung des Innenraums des Gehäuses wirkt. Dies bedeutet, dass die elastische Komponente eine Zugkraft auf den ersten Endabschnitt ausübt, sodass dieser in Richtung des Innenraums des Gehäuses gezogen wird. Die durch die elastische Komponente ausgeübte Kraft wirkt somit gegen die Auszugrichtung des ersten Endabschnitts aus dem Innenraum des Gehäuses. Dabei kann die elastische Komponente eine Zugkraft oder eine Druckkraft ausüben.

Durch eine Kombination eines Spannelements mit einer elastischen Komponente, welche beide wahlweise aus Gummi hergestellt sind, oder wenigstens das Spannelement und/oder vorzugsweise die elastische Komponente als Feder bereitgestellt werden, wird auf Grund der speziellen, punktuellen Zusammenführung folgende Auswirkung erzeugt: Das elastische Spannelement erzeugt eine verstärkte Spannkraft durch den Einsatz und das Zusammenwirken mit der elastischen Komponente; und durch die Umlenkung des Verbindungsabschnitts, wobei der umgelenkte Abschnitt relativ zum Gehäuse bewegbar ist, verlängert sich der Auszug des Spannelements. Hier werden die Vorteile eines Flaschenzugs ausgenutzt: Durch das Umlenken des Verbindungsabschnitts und die Wirkung der elastischen Komponente auf den Umlenkbereich wird ein Flaschenzug bereitgestellt, der einen größeren Auszug erlaubt. Die Wirkung des Flaschenzugs wird überlagert bzw. verstärkt durch die Elastizität des elastischen Spannelements.

Der Flaschenzug besteht aus zwei in etwa parallel verlaufenden Enden des langgestreckten Elements, nämlich den Endabschnitten des Spannelements. Diese sind über den Verbindungsabschnitt verbunden, der um eine Rolle oder eine gekrümmte, beispielsweise halbkreisförmige Führung. Um die Eigenschaften eines Flaschenzugs auszunutzen, ist der Verbindungsabschnitt nicht an der Führung fixiert, sondern kann entlang dieser in Längsrichtung des Spannelements gleiten. Beim Einsatz einer Rolle als Führung kann der Verbindungsabschnitt, je nach Position der Rolle im Gehäuse, die Rolle in eine Gleichgewichtsposition drehen. Die elastische Komponente übt auf den Verbindungsabschnitt eine Kraft aus (und umgekehrt), die in etwa doppelt so groß ist wie die am ersten oder zweiten Endabschnitt wirkende Kraft. Bei einem idealen Flaschenzug mit einem nicht dehnbaren Seil wäre die Kraft genau doppelt so groß, beim Einsatz eines elastischen Spannelements statt des Seils wird ein Teil der Kräfte durch die Spannung des Spannelements selbst erzeugt.

Ein Abschnitt des Verbindungsabschnitts verläuft insbesondere halbkreisförmig gekrümmt, insbesondere (gleitend) um die Führungsebene oder -rille. Die elastische Komponente, die im Innenraum des Gehäuses zwischen dem ersten Endabschnitt, dem zweiten Endabschnitt und dem Verbindungsabschnitt des Spannelements angeordnet ist, übt eine (Druck-)Kraft auf das Spannelement aus, die die Führungsebene oder -rille in die Richtung von der Öffnung weg drückt, sodass dieses gegen ein Herausziehen aus dem Gehäuseinneren vorgespannt ist. Statt einer Druckkraft kann auch eine Zugkraft ausgeübt werden, die die Führungsebene oder -rille in die Richtung von der Öffnung weg zieht

Durch die Kombination des Spannelements mit der elastischen Komponente wird es möglich, bei geringem Platzbedarf die in genannten und beabsichtigten Wirkungen zu erzeugen, wie z.B. großer Auszugweg bei geringem Platzbedarf der Vorrichtung.

Im Ergebnis wird eine Spannvorrichtung bereitgestellt, bei der sowohl das elastische Spannelement als auch die elastische Komponente dazu beitragen, die gewünschte Zugkraft am ersten Endabschnitt des Spannelements zu erzeugen. Der Platzbedarf ist reduziert, es werden hohe Spannkräfte erzielt, wobei durch den bewegliche Verbindungsabschnitt der Auszug des Spannelementes derart gesteuert wird, dass nur so viel Länge freigegeben wird, wie es die Kraft am ersten Endabschnitt erfordert. Es können enge Radlauffreiräume realisiert werden.

Das Spannelement ist vorzugsweise im Innenraum des Gehäuses so geführt, dass der erste Endabschnitt des Spannelements durch die Kraft der vorgespannten elastischen Komponente gegen ein Herausziehen des ersten Endabschnitts aus dem Innenraum des Gehäuses vorgespannt ist.

Das Gehäuse kann ein erstes Befestigungselement zur Befestigung eines ersten Schneekettenabschnitts und/oder ein zweites Befestigungselement zur Befestigung eines zweiten Schneekettenabschnitts aufweisen.

Insbesondere weist der Verbindungsabschnitt einen gekrümmten Abschnitt auf. Dieser gekrümmte Abschnitt ist nicht stationär im Innenraum des Gehäuses, sondern bewegbar angeordnet. D. h. wie die Umlenkrolle bei einem Flaschenzug bewegt sich die Umlenkstelle bei Krafteinwirkung auf das elastische Spannelement, wobei die elastische Komponente eine Gegenkraft ausübt. Erst wenn die Krafteinwirkung auf das Spannelement und die elastischen Kräfte des Spannelements und der elastischen Komponente im Gleichgewicht sind, ist die Umlenkstelle stationär im Innenraum des Gehäuses angeordnet. Bei einer Lockerung der Schneekette oder anderen Krafteinwirkungen wird wieder ein Kräftegleichgewicht hergestellt.

Der Verbindungsabschnitt kann einen um etwa 180° und/oder halbkreisförmig gekrümmten Abschnitt aufweisen. Auf diese Weise wird eine Platz sparende Anordnung erreicht.

Die Spannvorrichtung weist in einer speziellen Ausführungsform ein Umlenkelement auf, um das der Verbindungsabschnitt wenigstes teilweise geführt ist, wobei das Umlenkelement bewegbar und durch die Kraft der elastischen Komponente vorgespannt im Innenraum des Gehäuses angeordnet ist. Das Umlenkelement bildet die bewegbare Umlenkstelle für den Verbindungsbereich des elastischen Spannelements.

Das Umlenkelement kann vorzugsweise eine Führungsnut zur Führung des Verbindungsabschnitts aufweisen.

Der erste Endabschnitt und der zweite Endabschnitt können im Innenraum des Gehäuses im Wesentlichen parallel geführt sein.

Die Spannvorrichtung weist vorzugsweise eine Verriegelungsvorrichtung auf, die in einem Einsatzzustand gegen ein Herausziehen des ersten Endabschnitts durch die Öffnung sperrt, ein Hineinziehen des ersten Endabschnitts in den Innenraum dagegen freigibt, wobei die Verriegelungsvorrichtung entriegelbar ist, um die Spannvorrichtung in einen Vorspannzustand zu bringen und die elastische Komponente vorzuspannen, oder das Spannelement manuell zum Herausziehen des ersten Endabschnitts in einer erforderlichen Länge freizugeben. Durch die Rücklaufsicherung ist der Auszug des Spannelementes generell blockiert. Er kann nur durch manuelle Einstellung freigeschalten werden.

Die Rücklaufsicherung wird vorzugsweise durch ein elastisches Element wie eine Feder oder einen Gummi vorgespannt.

Die elastische Komponente kann insbesondere als Druckfeder ausgebildet sein.

Die Spannvorrichtung kann ein Befestigungsmittel, insbesondere eine Quetschhülse zur Befestigung eines Teilabschnitts oder eines Endes des zweiten Endabschnitts im Innenraum des Gehäuses aufweisen. Das Befestigungsmittel kann stationär im Gehäuse gehalten werden, z.B. durch eine formschlüssige Anordnung im Gehäuse.

In einer speziellen Ausführungsform kann die elastische Komponente ein zweites elastisches Spannelement umfassen, das mit dem elastischen Spannelement zusammenwirkt.

Eine Variante der erfindungsgemäßen Spannvorrichtung für Schneeketten, umfasst: ein Gehäuse mit einem Innenraum und einer Öffnung; ein erstes elastisches Spannelement mit einem ersten Endabschnitt, einem mit dem ersten Endabschnitt verbundenen Verbindungsabschnitt und einem mit dem Verbindungsabschnitt verbundenen zweiten Endabschnitt; wobei sich der erste Endabschnitt durch die Öffnung in den Innenraum des Gehäuses erstreckt; der Verbindungsabschnitt und der zweite Endabschnitt im Innenraum des Gehäuses verlaufen und wenigstens ein Teilabschnitt des zweiten Endabschnitts stationär im Innenraum des Gehäuses angeordnet ist. Die Spannvorrichtung weist ein zweites elastisches Spannelement mit einem ersten Endabschnitt auf, dessen eines Ende im Innenraum des Gehäuses stationär angeordnet ist, und mit einem zweiten Endabschnitt, dessen eines Ende mit einem Umlenkelement verbunden ist, das beweglich im Innenraum des Gehäuses angeordnet ist, und das am Verbindungsabschnitt des ersten elastischen Spannelements angreift und auf den ersten Endabschnitt des Spannelements bei vorgespanntem zweiten Spannelement eine Zugkraft in Richtung des Innenraums des Gehäuses ausübt.

Das Umlenkelement ist auch hier beweglich im Innenraum des Gehäuses angeordnet und greift am Verbindungsabschnitt des Spannelements an und spannt bzw. zieht den ersten Endabschnitt des (ersten) Spannelements in Richtung des Innenraums des Gehäuses.

Für alle genannten Merkmale soll sowohl einzeln als auch in Kombinationen miteinander Schutz beansprucht werden.

### KURZE BESCHREIBUNG DER FIGUREN

Weitere Vorteile und Merkmale der Erfindung werden aus der Beschreibung bevorzugter Ausführungsbeispiele anhand der Figuren deutlich. Es zeigen:
- Figur 1: eine Draufsicht auf ein erstes Ausführungsbeispiel einer Spannvorrichtung gemäß der Erfindung;
- Figur 2: eine Innenansicht der Spannvorrichtung aus der Figur 1 bei geöffnetem Gehäuse;
- Figur 3: eine Ansicht eines Teils des Gehäuses der Spannvorrichtung aus der Figur 1;
- Figur 4: eine schematische Innenansicht einer Variante des ersten Ausführungsbeispiels einer Spannvorrichtung gemäß der Erfindung;
- Figur 5: eine schematische Innenansicht eines zweiten Ausführungsbeispiels einer Spannvorrichtung gemäß der Erfindung.

### DETAILLIERTE BESCHREIBUNG BEVORZUGTER AUSFÜHRUNGSBEISPIELE

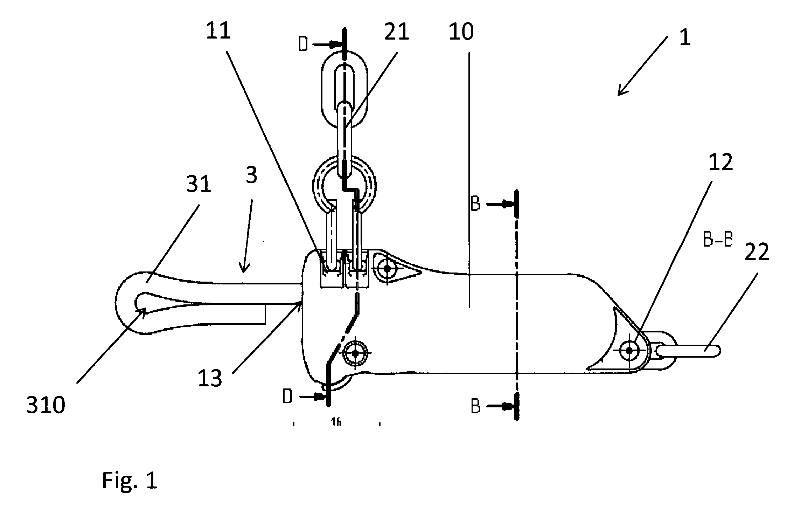

In den Figuren 1 bis 3 ist eine erste Ausführungsform einer Spannvorrichtung 1 für Schneeketten entsprechend der Erfindung dargestellt.

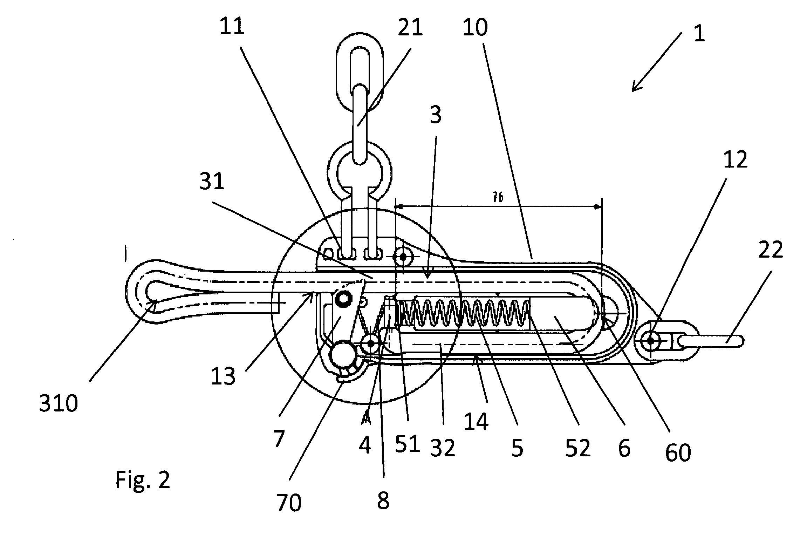

Die Spannvorrichtung 1 weist ein Gehäuse 10 auf. An einer ersten Befestigungsvorrichtung 11 des Gehäuses 10 ist ein Ende eines ersten Schneekettenabschnitts 21 befestigt. Die erste Befestigungsvorrichtung 11 weist zwei Öffnungen auf, die sich durch das Gehäuse 10 hindurch erstrecken, und durch die jeweils ein schlaufenartig gebogener Abschnitt des Endglieds des Schneekettenabschnitts 21 hindurch geführt ist. An einer zweiten Befestigungsvorrichtung 12 des Gehäuses 10 ist ein Ende eines zweiten Schneekettenabschnitts 22 befestigt. Die zweite Befestigungsvorrichtung 12 weist einen Bolzen auf, der durch ein Endglied des zweiten Schneekettenabschnitts 22 geführt ist (vgl. auch Figur 2).

Das Gehäuse 10 weist Wände und einen Innenraum auf. Der Innenraum ist über eine Öffnung 13 des Gehäuses 10 zugänglich. Durch die Öffnung 13 hindurch ragt ein erster Endabschnitt 31 eines elastischen Spannelements 3. An dessen äußerem Ende ist eine Schlaufe 310 gebildet, an der ein zu spannender Schneekettenabschnitt befestigt werden kann.

Die Figur 2 zeigt eine Innenansicht der Spannvorrichtung 1, d.h. der obere Gehäuseteil wurde entfernt, sodass der Innenraum 14 des Gehäuses 10 einsehbar ist.

Neben den bereits beschriebenen Komponenten weist die Vorrichtung 1 eine Quetschhülse 4 auf, an der das Ende eines zweiten Endabschnitts 32 des elastischen Spannelements 3 befestigt ist. Die Quetschhülse 4 kann beispielsweise durch Formschluss im Gehäuseinnenraum 14 festgelegt sein.

Das Spannelement 3 weist einen ersten Endabschnitt 31 auf. Ein Abschnitt des ersten Endabschnitts 31 ragt durch die Öffnung 13 aus dem Innenraum heraus. Der zweite Endabschnitt 32 ist im inneren des Gehäuses 10 befestigt und verläuft im Innenraum 14 des Gehäuses 10. Zwischen dem ersten Endabschnitt 31 und dem zweiten Endabschnitt 32 weist das Spannelement 3 einen Verbindungsabschnitt 30 auf. Ein Abschnitt des Verbindungsabschnitts 30 verläuft gekrümmt, insbesondere halbkreisförmig gekrümmt. Damit verläuft der erste Endabschnitt 31 des Spannelements 3 im Wesentlichen geradlinig durch die Öffnung 13 und innerhalb des Innenraums 14 des Gehäuses 10, geht in den Verbindungsabschnitt 30 des Spannelements 3 über, welcher einen gekrümmten Abschnitt mit einem Verlauf einer 180°-Kurve aufweist. Die andere Seite des Verbindungsabschnitts 30 geht in den zweiten Endabschnitt 32 über, der im Wesentlichen geradlinig im Innenraum 14 des Gehäuses 10 verläuft und dessen freies Ende von der Quetschhülse 4 in einer stationären Position relativ zum Gehäuse 10 gehalten wird.

Die Spannvorrichtung 1 weit außerdem eine Druckfeder 5 auf, die im Innenraum 14 des Gehäuses zwischen dem ersten Endabschnitt 31, dem zweiten Endabschnitt 32 und dem Verbindungsabschnitt 30 des Spannelements 3 angeordnet ist. Ein erstes stationäres Ende 51 der Druckfeder 5 liegt an der Quetschhülse 4 an, das andere bewegliche Ende der Druckfeder 5 liegt an einem Umlenkelement 6 an. Das Umlenkelement 6 ist beweglich im Gehäuse 10 angeordnet und wird durch die Druckkraft der Druckfeder 5 von der Quetschhülse 4 weg gedrückt, sobald die Druckfeder 5 vorgespannt ist.

Das Umlenkelement 6 weist eine Rille 60 auf, in der der gekrümmte Abschnitt des Verbindungsabschnitts 30 geführt ist. Über den gekrümmten Abschnitt des Verbindungsabschnitts 30 wird eine Gegenkraft gegen die vorgespannte Druckfeder 5 ausgeübt. Die Kraft der Druckfeder sorgt dafür, dass das elastische Spannelement 3 gespannt und somit der erste Endabschnitt 31 in den Innenraum 14 des Gehäuses 10 hineingezogen wird, bis die Druckkraft der Feder 5 und vom Verbindungsabschnitt 30 ausgeübte Gegenkraft in einem Gleichgewicht stehen.

Um ein Herausziehen des ersten Endabschnitts 31 des Spannelements 3 aus dem Gehäuse 10 (und damit ein Entspannen der zu spannenden Schneekette) zu verhindern, weist die Vorrichtung 1 eine Sperrvorrichtung 7 (etwa in Form einer Sperrklinke) auf. Die Sperrvorrichtung 7 ist so ausgebildet, dass ein Hineinziehen des ersten Endabschnitts 31 des Spannelements 3 in den Innenraum 14 des Gehäuses 10 jederzeit möglich ist, während die Sperrvorrichtung 7 gegen ein Hinausziehen des ersten Endabschnitts 31 des Spannelements 3 aus dem Innenraum 14 sperrt.

Die Sperrvorrichtung 7 kann über einen Betätigungselement 70 entriegelt werden (Vorspannzustand), sodass auch ein Herausziehen des ersten Endabschnitts 31 des Spannelements 3 aus dem Innenraum 14 möglich ist, um die Spannvorrichtung 1 vorzuspannen, indem die Druckfeder 5 durch Herausziehen des ersten Endabschnitts 31 komprimiert wird. Anschließend wird der zu spannende Abschnitt einer Schneekette am Spannelement 3 befestigt und die Sperrvorrichtung wieder verriegelt (Einsatzzustand).

Die Sperrvorrichtung 7 wird, sofern nicht das Betätigungselement betätigt wird, durch eine Feder 9, deren eine Seite sich an der Quetschhülse 4 abstützt, und deren andere Seite an der Sperrvorrichtung angreift, im verriegelten Zustand (Einsatzzustand) gehalten.

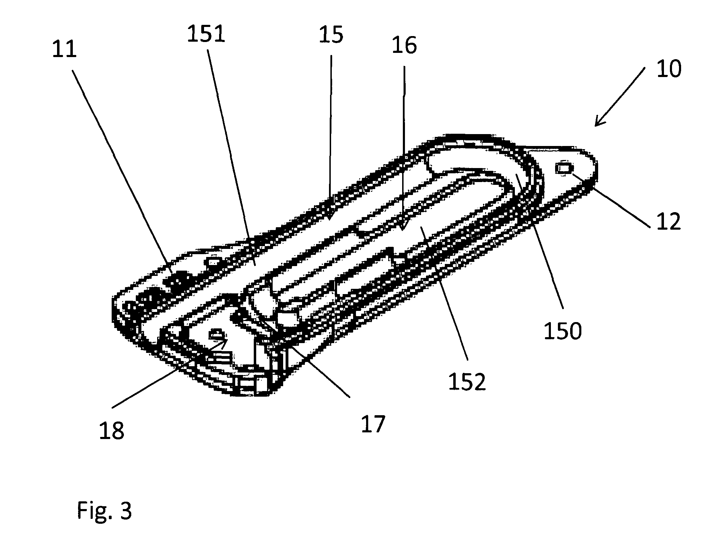

In der Figur 3 ist die Innenseite eines Teils des Gehäuses 10 dargestellt. Die Innenseite des Gehäuseteils weist eine Struktur auf, die eine Führungsnut 15 umfasst. Die Führungsnut 15 weist einen ersten Nutabschnitt 151 zur Führung des ersten Endabschnitts 31 des Spannelements 3, und einen zweiten Nutabschnitt 152 zur Führung des zweiten Endabschnitts 32 des Spannelements 3 auf, wobei der erste Nutabschnitt 151 und der zweite Nutabschnitt 152 im Wesentlichen parallel zueinander verlaufen. Der erste Nutabschnitt 151 und der zweite Nutabschnitt 152 sind über einen gekrümmten Verbindungsnutabschnitt 150 zur Führung des gekrümmten Abschnitts des Verbindungsabschnitts 30 des Spannelements 3 verbunden. Der Verbindungsnutabschnitt 150 ist um 180° bzw. halbkreisförmig gekrümmt.

Außerdem weist die Struktur der Innenseite des Gehäuseteils eine Aufnahme 16 auf, in die die Druckfeder 5 und das Umlenkelement 6 eingelegt sind. Das Umlenkelement 6 ist innerhalb der Aufnahme 16 beweglich angeordnet.

Darüber hinaus weist die Struktur der Innenseite des Gehäuseteils Aufnahmen 17 und 18 auf, wobei in die Aufnahme 17 formschlüssig die Quetschhülse 4 einpasst werden kann. Die Aufnahme 18 nimmt die Sperrvorrichtung 7 auf.

Durch Verschließen des dargestellten ersten Gehäuseteils mit dem zweiten passenden Gehäuseteil werden die Komponenten im Gehäuse (formschlüssig) fixiert oder beweglich festgelegt.

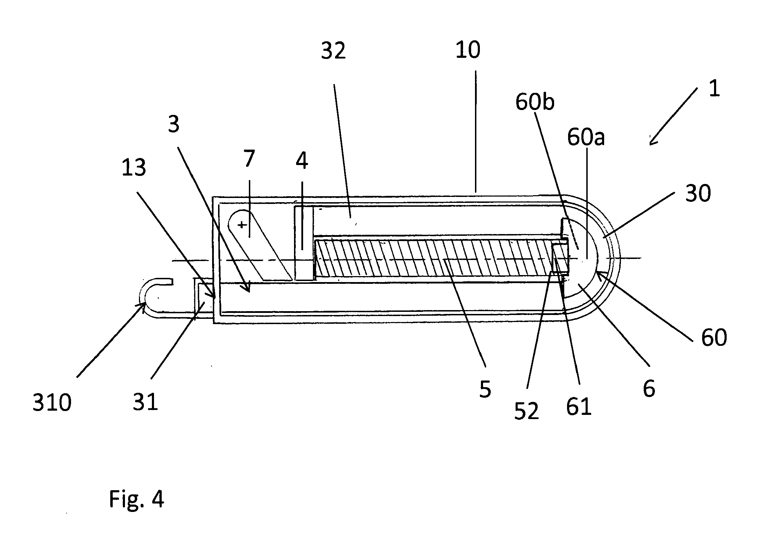

In der Figur 4 ist eine Variante der ersten Ausführungsform einer Spannvorrichtung 1 dargestellt, wobei entsprechende Komponenten mit denselben Bezugszeichen bezeichnet sind. In dieser Darstellung wird deutlich, dass das Umlenkelement eine Führungsnut 60 aufweist, die durch einen vorderen Vorsprung 60a und einen parallel dazu angeordneten hinteren Vorsprung 60b begrenzt wird. Ein Eingriffselement 61 steht in gegenseitigem Eingriff mit dem zweiten beweglichen Endbereich 52 der Druckfeder 5.

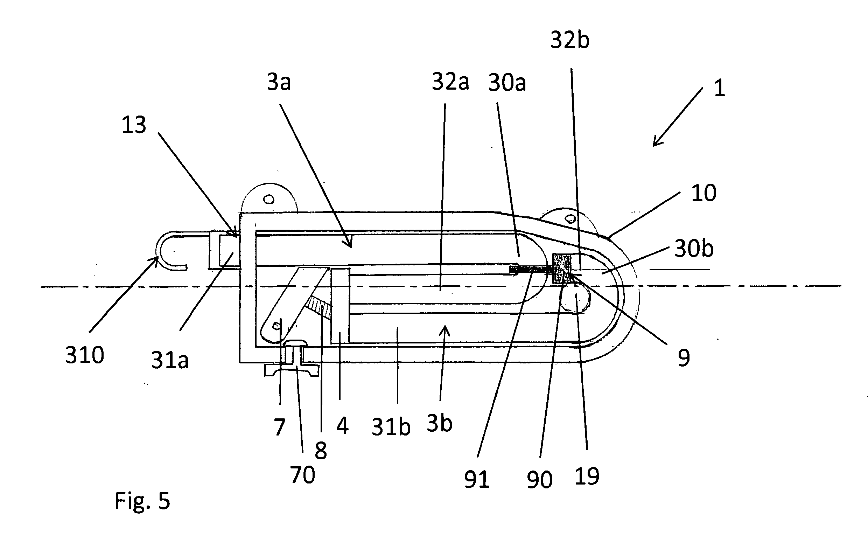

Die Figur 5 zeigt eine zweite Ausführungsform einer erfindungsgemäßen Spannvorrichtung 1 für Schneeketten, wobei auch in dieser Darstellung der ersten Ausführungsform entsprechende Komponenten mit denselben Bezugszeichen bezeichnet sind.

In dieser Ausführungsform weist die Vorrichtung 1 keine Druckfeder auf. Stattdessen sind zwei Spannelemente, nämlich ein erstes Spannelement 3a mit einem ersten Endabschnitt 31a, einem zweiten Endabschnitt 32a, dessen freies Ende in einer stationären Quetschhülse 4 befestigt ist, und einem Verbindungsabschnitt 30a. Der Verbindungsabschnitt 30a verläuft wie in der ersten Ausführungsform, gekrümmt. Er wird jedoch nicht durch eine Druckfeder und ein rollenartiges Umlenkelement, sondern durch ein Umlenkelement in Form einer Halterung 9 gespannt. Die Halterung 9 besitzt einen Halteabschnitt 90 und einen

Ösenabschnitt 91, durch den das erste Spannelement 3a hindurch geführt ist. Die Halterung ist beweglich im Gehäuseinneren angeordnet.

Darüber hinaus weist die Vorrichtung 1 ein zweites Spannelement 3b mit einem ersten Endabschnitt 31b, einem zweiten Endabschnitt 32b, dessen freies Ende neben dem freien Ende des zweiten Endabschnitts 32a des ersten Spannelements 3a in der Quetschhülse 4 befestigt ist, und einem Verbindungsabschnitt 30b. Der Verbindungsabschnitt 30b verläuft wie in der ersten Ausführungsform, gekrümmt um einen Umlenkbolzen 19 herum und geht in den kurzen zweiten Endabschnitt 32b über. Dieser ist am Halteabschnitt 90 des Umlenkelements 9 befestigt.

In dieser Ausführungsform übernimmt das zweite Spannelement 3b die Aufgabe der Druckfeder. Beim Vorspannen wird die Verriegelung 7 entriegelt und das Umlenkelement 9 in Richtung der Quetschhülse 4 gezogen (Vorspannzustand). Im Einsatzzustand bei aktivierter Verriegelung 7 zieht bei einer Lockerung des ersten Spannelements 3a das zweite (vorgespannte) Spannelement 3b das Umlenkelement 9 von der Quetschhülse weg und spannt so das erste Spannelement 3a. Die Verriegelungsvorrichtung ist (in aktiviertem Zustand) so ausgebildet, dass sie eine Bewegung des ersten Endabschnitts 31a des ersten Spannelements 3a in das Gehäuseinnere zulässt, ein Herausziehen des ersten Endabschnitts 31a des ersten Spannelements 3a dagegen blockiert.

Mit Hilfe der Spannvorrichtungen 1 wird eine einfache, kraftsparende und komfortable Möglichkeit eröffnet, Schneeketten selbstspannend gegenüber Lockerungen während des Betriebs (im Einsatzzustand) anzubringen.

### BEZUGSZEICHENLISTE

- 1: Spannvorrichtung
- 10: Gehäuse
- 11: erste Befestigungsvorrichtung
- 12: zweite Befestigungsvorrichtung
- 13: Öffnung
- 14: Innenraum
- 15: Führungsnut
- 151: erster Nutabschnitt
- 152: zweiter Nutabschnitt
- 16: Aufnahme
- 17: Aufnahme
- 18: Aufnahme
- 19: Umlenkbolzen
- 21: erster Schneekettenabschnitt
- 22: zweiter Schneekettenabschnitt
- 3, 3a: elastisches Spannelement
- 30,30a: Verbindungsabschnitt
- 31,31a: erster Endabschnitt
- 32: zweiter Endabschnitt
- 310: Schlaufe
- 4: Quetschhülse
- 5: Druckfeder
- 52: Endbereich
- 6: Umlenkelement
- 60: Rille
- 60a: vorderer Vorsprung
- 60b: hinterer Vorsprung
- 7: Sperrvorrichtung
- 70: Betätigungselement
- 9: Halterung
- 90: Halteabschnitt
- 91: Ösenabschnitt

## Patentansprüche

1. Spannvorrichtung (1) für Schneeketten, umfassend:
ein Gehäuse (10) mit einem Innenraum (14) und einer Öffnung (13);
ein elastisches Spannelement (3) mit einem ersten Endabschnitt (31), einem mit dem ersten Endabschnitt (31) verbundenen Verbindungsabschnitt (30) und einem mit dem Verbindungsabschnitt (30) verbundenen zweiten Endabschnitt (32);
wobei sich der erste Endabschnitt (31) durch die Öffnung in den Innenraum (14) des Gehäuses (10) erstreckt; der Verbindungsabschnitt (30) und der zweite Endabschnitt (32) im Innenraum (14) des Gehäuses (10) verlaufen und wenigstens ein Teilabschnitt des zweiten Endabschnitts (32) stationär im Innenraum (14) des Gehäuses (10) angeordnet ist; und
eine elastische Komponente (5),
**dadurch gekennzeichnet, dass**
die Spannvorrichtung (1) ein Umlenkelement (6) aufweist, das beweglich im Innenraum (14) des Gehäuses (10) angeordnet ist und das am Verbindungsabschnitt (30) des Spannelements (3) angreift, wobei die unter einer Vorspannung stehende elastische Komponente (5) eine Kraft auf den durch das Umlenkelement (6) umgelenkten Verbindungsabschnitt (30) des elastischen Spannelements (3) derart ausübt, dass das elastische Spannelement (3) gespannt wird und somit der erste Endabschnitt (31) des Spannelements (3) in Richtung des Innenraums (14) des Gehäuses (10) gezogen wird.

2. Spannvorrichtung (1) nach Anspruch 1,
**dadurch gekennzeichnet, dass**
dass das Spannelement (3) im Innenraum (14) des Gehäuses (10) so geführt ist, dass der erste Endabschnitt (31) des Spannelements (3) durch die Kraft der vorgespannten elastischen Komponente (5) gegen ein Herausziehen des ersten Endabschnitts (31) aus dem Innenraum (14) des Gehäuses (10) vorgespannt ist.

3. Spannvorrichtung (1) nach einem der vorhergehenden Ansprüche,
**dadurch gekennzeichnet, dass**
das Gehäuse (10) ein erstes Befestigungselement (11) zur Befestigung eines ersten Schneekettenabschnitts (21) und/oder ein zweites Befestigungselement (12) zur Befestigung eines zweiten Schneekettenabschnitts (22) aufweist.

4. Spannvorrichtung (1) nach einem der vorhergehenden Ansprüche,
**dadurch gekennzeichnet, dass**
der Verbindungsabschnitt (30) einen gekrümmten Abschnitt aufweist.

5. Spannvorrichtung (1) nach einem der vorhergehenden Ansprüche,
**dadurch gekennzeichnet, dass**
der Verbindungsabschnitt (30) einen um etwa 180° und/oder halbkreisförmig gekrümmten Abschnitt aufweist.

6. Spannvorrichtung (1) nach einem der vorhergehenden Ansprüche,
**dadurch gekennzeichnet, dass**
die Spannvorrichtung (1) ein Umlenkelement (6) aufweist, um das der Verbindungsabschnitt (30) wenigstes teilweise geführt ist, wobei das Umlenkelement (6) bewegbar im Innenraum (14) des Gehäuses (10) angeordnet und derart mit einem freien Ende (52) der elastischen Komponente (5) verbunden ist, das das Umlenkelement (6) die von der vorgespannten elastischen Komponente (5) ausgeübte Kraft auf den Verbindungsabschnitt (30) des elastischen Elements (3) überträgt.

7. Spannvorrichtung (1) nach Anspruch 6,
**dadurch gekennzeichnet, dass**
das Umlenkelement (6) eine Führungsnut (60) zur Führung wenigstens eines Teilabschnitts des Verbindungsabschnitts (30) aufweist.

8. Spannvorrichtung (1) nach einem der vorhergehenden Ansprüche,
**dadurch gekennzeichnet, dass**
der erste Endabschnitt (31) und der zweite Endabschnitt (32) im Innenraum (14) des Gehäuses (10) im Wesentlichen parallel geführt sind.

9. Spannvorrichtung (1) nach einem der vorhergehenden Ansprüche,
**dadurch gekennzeichnet, dass**
die Spannvorrichtung (1) eine Verriegelungsvorrichtung (7) aufweist, die in einem Einsatzzustand einseitig gegen ein Herausziehen des ersten Endabschnitts (31) durch die Öffnung (13) sperrt, ein Hineinziehen des ersten Endabschnitts (31) in den Innenraum (14) freigibt, wobei die Verriegelungsvorrichtung (7) entriegelbar ist, um die Spannvorrichtung (1) in einen Vorspannzustand zu bringen und die elastische Komponente (5) vorzuspannen.

10. Spannvorrichtung (1) nach einem der vorhergehenden Ansprüche,
**dadurch gekennzeichnet, dass**
die elastische Komponente (5) als Druckfeder ausgebildet ist.

11. Spannvorrichtung (1) nach einem der vorhergehenden Ansprüche,
**dadurch gekennzeichnet, dass**
die Spannvorrichtung (1) ein Befestigungsmittel, insbesondere eine Quetschhülse (4), zur Befestigung eines Teilabschnitts des zweiten Endabschnitts (32) im Innenraum (14) des Gehäuses (10) aufweist.

12. Spannvorrichtung (1) nach einem der vorhergehenden Ansprüche,
**dadurch gekennzeichnet, dass**
die Spannvorrichtung (1) statt der elastischen Komponente (5) ein zweites elastisches Spannelement (3b) umfasst, das mit dem elastischen Spannelement (3a) zusammenwirkt.

13. Spannvorrichtung (1) für Schneeketten, umfassend:
ein Gehäuse (10) mit einem Innenraum (14) und einer Öffnung (13);
ein erstes elastisches Spannelement (3a) mit einem ersten Endabschnitt (31a), einem mit dem ersten Endabschnitt (31a) verbundenen Verbindungsabschnitt (30a) und
einem mit dem Verbindungsabschnitt (30a) verbundenen zweiten Endabschnitt (32a);
wobei sich der erste Endabschnitt (31a) durch die Öffnung in den Innenraum (14) des Gehäuses (10) erstreckt; der Verbindungsabschnitt (30a) und der zweite Endabschnitt (32a) im Innenraum (14) des Gehäuses (10) verlaufen und wenigstens ein Teilabschnitt des zweiten Endabschnitts (32a) stationär im Innenraum (14) des Gehäuses (10) angeordnet ist;
**dadurch gekennzeichnet, dass**
die Spannvorrichtung (1) ein zweites elastisches Spannelement (3b) mit einem ersten Endabschnitt (31b) aufweist, dessen eines Ende im Innenraum (14) des Gehäuses (10) stationär angeordnet ist, und mit einem zweiten Endabschnitt (32b), dessen eines Ende mit einem Umlenkelement (9) verbunden ist, das beweglich im Innenraum (14) des Gehäuses (10) angeordnet ist, und das am Verbindungsabschnitt (30a) des ersten elastischen Spannelements (3a) angreift und auf den ersten Endabschnitt (31a) des Spannelements (3a) bei vorgespanntem zweiten Spannelement (3b) eine Zugkraft in Richtung des Innenraums (14) des Gehäuses (10) ausübt.

## Claims

1. A tensioning device (1) for non-skid chains, comprising
a housing (10) having an interior space (14) and an opening (13);
an elastic tensioning element (3) having a first end section (31), a connection section (30) connected to the first end section (31), and having a second end section (32) connected to the connection section (30);
wherein the first end section (31) extends through the opening into the interior space (14) of the housing (10); the connection section (30) and the second end section (32) extend within the interior space (14) of the housing (10) and at least a part of the second end section (32) is arranged stationary within the interior space (14) of the housing (10); and
an elastic component (5),
**characterized in that**
the tensioning device (1) has a deflection element (6) which is arranged moveably within the interior space (14) of the housing (10) and which actuates the connection section (30) of the tensioning element (3), wherein the elastic component (5) which is pre-loaded exerts a force on the connection section (30) of the elastic tensioning element (3), the connection section (30) being deflected by the deflection element (6), such that the elastic tensioning element (3) is stretched and thus the first end section (31) of the tensioning element (3) is moved in the direction of the interior space (14) of the housing (10).

2. The tensioning device (1) according to claim 1,
**characterized in that**
the tensioning element (3) extends within the interior space (14) of the housing (10) such that the first end section (31) of the tensioning element (3) is pre-loaded by the force exerted by the pre-loaded elastic component (5) for preventing pulling of the first end section (31) out of the interior space (14) of the housing (10).

3. The tensioning device (1) according to any of the previous claims,
**characterized in that**
the housing (10) has a first fastening element (11) for fixing a first section (21) of the non-skid chain and/or a second fastening element (12) for fixing a second section (22) of the non-skid chain.

4. The tensioning device (1) according to any of the previous claims,
**characterized in that**
the connection section (30) has a curved section.

5. The tensioning device (1) according to any of the previous claims,
**characterized in that**
the connection section (30) has a curved section of about 180° and/or a semicircular curved section.

6. The tensioning device (1) according to any of the previous claims,
**characterized in that**
the tensioning device (1) has a deflection element (6), the connection section (30) being at least partly guided around the deflection element (6) wherein the deflection element (6) is arranged moveable within the interior space (14) of the housing (10) and it is connected with a free end (52) of the elastic component (5) such that the deflection element (6) transfers the force exerted by the pre-loaded elastic component (5) to the connection section (30) of the elastic element (3).

7. The tensioning device (1) according to claim 6,
**characterized in that**
the deflection element (6) has a guiding notch (60) for guiding at least a part of the connection section (30).

8. The tensioning device (1) according to any of the previous claims,
**characterized in that**
the first end section (31) and the second end section (32) are arranged substantially parallel within the interior space (14) of the housing (10).

9. The tensioning device (1) according to any of the previous claims,
**characterized in that**
the tensioning device (1) has a locking device (7) which, during use, unidirectionally locks the first end section (31) in order to prevent pulling the first end section (31) through the opening (13) out of the interior space, but allows pulling of the first end section (31) into the interior space (14), wherein the locking device (7) may be unlocked in order to bring the tensioning device (1) in a state of pre-tensioning and to pre-load the elastic component (5).

10. The tensioning device (1) according to any of the previous claims,
**characterized in that**
the elastic component (5) is a pressure spring.

11. The tensioning device (1) according to any of the previous claims,
**characterized in that**
the tensioning device (1) has fastening means, particularly a ferrule (4), for fixing a part of the second end section (32) within the interior space (14) of the housing (10).

12. The tensioning device (1) according to any of the previous claims,
**characterized in that**
the tensioning device (1) has a second elastic tensioning element (3b) instead of the elastic component (5), which interacts with the elastic tensioning element (3a).

13. A tensioning device (1) for non-skid chains, comprising:
a housing (10) having an interior space (14) and an opening (13);
a first elastic tensioning element (3a) having a first end section (31 a), a connection section (30a) being connected with the first end section (31 a), and a second end section (32a) connected to the connection section (30a); wherein the first end section (31 a) extends through the opening into the interior space (14) of the housing (10); the connection section (30a) and the second end section (32a) extend within the interior space (14) of the housing (10) and at least a part of the second end section (32a) is arranged stationary within the interior space (14) of the housing (10);
**characterized in that**
the tensioning device (1) has a second elastic tensioning element (3b) having a first end section (31 b), one end of the first end section (31 b) being arranged stationary within the interior space (14) of the housing (10), and having a second end section (32b), one end of the second end section (32b) being connected to a deflection element (9), which is moveably arranged within the interior space (14) of the housing (10), and which actuates the connection section (30a) of the first elastic tensioning element (3a) and exerts a tensile force on the first end section (31 a) of the tensioning element (3a) pulling it in the direction of the interior space (14) of the housing (10) when the second tensioning element (3b) is pre-loaded.

## Revendications

1. Dispositif de serrage (1) pour chaînes à neige comprenant :
un bâti (10) avec un espace intérieur (14) et une ouverture (13) ;
un élément de serrage élastique (3) avec une première section d'extrémité (31),
une section de liaison (30) liée à la première section d'extrémité (31) et une seconde section d'extrémité (32) liée à la section de liaison (32),
cependant que la première section d'extrémité (31) s'étend à travers l'ouverture dans l'espace intérieur (14) du bâti (10), la section de liaison (30) et la seconde section d'extrémité (32) sont dans l'espace intérieur (14) du bâti (10) et au moins une section partielle de la seconde section d'extrémité (32) est placée de manière stationnaire dans l'espace intérieur (14) du bâti (10) et
un composant élastique (5),
**caractérisé en ce que**
le dispositif de serrage (1) présente un élément de renvoi (6) qui est placé mobile dans l'espace intérieur (14) du bâti (10) et qui est appliqué sur la section de liaison (30) de l'élément de serrage (3), cependant que le composant élastique (5) qui se trouve sous une précontrainte exerce une force sur la section de liaison (30) renvoyée par l'élément de renvoi (6) de l'élément de serrage élastique (3) de telle manière que l'élément de serrage élastique (3) est tenu et que la première section d'extrémité (31) de l'élément de serrage (3) est ainsi tirée en direction de l'espace intérieur (14) du bâti (10).

2. Dispositif de serrage (1) selon la revendication 1,
**caractérisé en ce que**
l'élément de serrage (3) est guidé dans l'espace intérieur (14) du bâti de telle manière que la première section d'extrémité (31) de l'élément de serrage (3) est précontrainte par la force du composant élastique (5) contre une extraction de la première section d'extrémité (31) hors de l'espace intérieur (14) du bâti (10).

3. Dispositif de serrage (1) selon l'une des revendications précédentes,
**caractérisé en ce que**
le bâti présente un premier élément de fixation (11) pour la fixation d'une première section de chaîne à neige (21) et/ou un second élément de fixation (12) pour la fixation d'une seconde section de chaîne à neige (22).

4. Dispositif de serrage (1) selon l'une des revendications précédentes,
**caractérisé en ce que**
la section de liaison (30) présente une section courbée.

5. Dispositif de serrage (1) selon l'une des revendications précédentes,
**caractérisé en ce que**
la section de liaison (30) présente une section courbée d'environ 180° et/ou en forme de demi-cercle.

6. Dispositif de serrage (1) selon l'une des revendications précédentes,
**caractérisé en ce que**
le dispositif de serrage (1) présente un élément de renvoi (6) autour duquel la section de liaison (30) est guidée au moins partiellement, cependant que l'élément de renvoi (6) est placé mobile dans l'espace intérieur (14) du bâti (10) et est relié à l'extrémité libre (52) du composant élastique (5) de telle manière que l'élément de renvoi (6) transmet la force exercée par le composant élastique précontraint à la section de liaison (30) de l'élément élastique (3).

7. Dispositif de serrage (1) selon la revendication 6,
**caractérisé en ce que**
l'élément de renvoi (6) présente une rainure de guidage (60) pour le guidage d'au moins une section partielle de la section de liaison (30).

8. Dispositif de serrage (1) selon l'une des revendications précédentes,
**caractérisé en ce que**
la première section d'extrémité (31) et la seconde section d'extrémité (32) sont guidées substantiellement parallèlement dans l'espace intérieur (14) du bâti (10).

9. Dispositif de serrage (1) selon l'une des revendications précédentes,
**caractérisé en ce que**
le dispositif de serrage (1) présente un dispositif de verrouillage (7) qui empêche, dans un état de service, d'un côté l'extraction de la première section d'extrémité (31) par l'ouverture (13), libère une entrée de la première section d'extrémité (31) dans l'espace intérieur (14), cependant que le dispositif de verrouillage (7) peut être déverrouillé pour amener le dispositif de serrage (1) dans un état de précontrainte et pour précontraindre le composant élastique (5).

10. Dispositif de serrage (1) selon l'une des revendications précédentes,
**caractérisé en ce que**
le composant élastique (5) est configuré comme un ressort de pression.

11. Dispositif de serrage (1) selon l'une des revendications précédentes,
**caractérisé en ce que**
le dispositif de serrage (1) présente un moyen de fixation, en particulier une douille à sertir (4), pour la fixation d'une section partielle de la seconde section d'extrémité (32) dans l'espace intérieur (14) du bâti (10).

12. Dispositif de serrage (1) selon l'une des revendications précédentes,
**caractérisé en ce que**
le dispositif de serrage (1) comprend, au lieu du composant élastique (5), un second élément de serrage élastique (3b) qui coopère avec l'élément de serrage élastique (3a).

13. Dispositif de serrage (1) pour chaînes à neige comprenant :
un bâti (10) avec un espace intérieur (14) et une ouverture (13) ;
un premier élément de serrage élastique (3) avec une première section d'extrémité (31 a), une section de liaison (30a) liée à la première section d'extrémité (31 a) et une seconde section d'extrémité (32a) liée à la section de liaison (32), cependant que la première section d'extrémité (31 a) s'étend à travers l'ouverture dans l'espace intérieur (14) du bâti (10), la section de liaison (30a) et la seconde section d'extrémité (32a) sont dans l'espace intérieur (14) du bâti (10) et au moins une section partielle de la seconde section d'extrémité (32a) est placée de manière stationnaire dans l'espace intérieur (14) du bâti (10),
**caractérisé en ce que**
le dispositif de serrage (1) présente un second élément de serrage élastique (3b) avec une première section d'extrémité (31 b) dont l'une des extrémités est placée stationnaire dans l'espace intérieur (14) du bâti (10) et avec une seconde section d'extrémité (32b) dont l'une des extrémités est reliée à un élément de renvoi (9) qui est placé mobile dans l'espace intérieur (14) du bâti (10) et est appliqué sur la section de liaison (30a) de l'élément de serrage (3a) et exerce une force de traction en direction de l'espace intérieur (14) du bâti (10) lorsque le second élément de serrage (3b) est précontraint.
